# EUROPEAN PATENT APPLICATION

(11) **EP 4 607 883 A1**
(43) Date of publication of application: **27.08.2025**
(21) Application number: 23896652.7
(22) Date of filing: 23.11.2023
(51) Int. Cl.: H04L 47/2425

(54) **DATA FLOW SCHEDULING METHOD AND RELATED DEVICE**

(30) Priority: 30.11.2022 CN 202211528807
(71) Applicant: Huawei Technologies Co., Ltd., Shenzhen, Guangdong 518129 (CN)
(72) Inventor: HE, Bin, Shenzhen, Guangdong 518129 (CN); SONG, Qiubin, Shenzhen, Guangdong 518129 (CN); YUAN, Peng, Shenzhen, Guangdong 518129 (CN)
(74) Representative: Gill Jennings & Every LLP
(86) International application number: PCT/CN2023/133602
(87) International publication number: WO 2024/114501

(57) **Abstract**

Embodiments of this application disclose a data flow scheduling method, which may be applied to a scenario in which both a delay-sensitive service and a bandwidth-sensitive service are transmitted, and the like. The method includes: obtaining a first data flow and a second data flow. A priority of the first data flow is higher than a priority of the second data flow. The first data flow is transmitted by using a first queue, and the second data flow is transmitted by using a second queue. In addition, a transmission feature of the first data flow in the first queue is considered in a second queue scheduling process, to reduce overstock, of the second data flow scheduled out of the second queue, in a bottom-layer queue. In other words, a moment at which the first data flow arrives at the first queue is considered when the second queue is scheduled, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

## Description

This application claims priority to Chinese Patent Application No. 202211528807.3, filed with the China National Intellectual Property Administration on November 30, 2022 and entitled "DATA FLOW SCHEDULING METHOD AND RELATED DEVICE", which is incorporated herein by reference in its entirety.

### TECHNICAL FIELD

This application relates to the field of computer technologies, and in particular, to a data flow scheduling method and a related device.

### BACKGROUND

As terminal devices such as a mobile phone, a tablet computer, and a smartwatch are diversified, there are more cross-device near-field distributed services such as file sharing and projection.

At present, a same device may simultaneously perform a plurality of distributed services, and these services have different traffic features and priorities. For example, file sharing is featured by continuous heavy traffic and is sensitive to a bandwidth. The projection is featured by periodic burst traffic, is delay-sensitive, and has a higher priority.

Therefore, when a plurality of services are concurrently performed, how to perform proper scheduling is an urgent technical problem to be resolved.

### SUMMARY

This application provides a data flow scheduling method and a related device. A second queue is scheduled based on a transmission feature of a first data flow in a first queue, to reduce overstock, of the second data flow scheduled out of the second queue, in a bottom-layer queue, thereby ensuring low-delay transmission of the first data flow.

A first aspect of embodiments of this application provides a data flow scheduling method. The method may be applied to a scenario in which both a delay-sensitive service and a bandwidth-sensitive service are transmitted, and the like. The method may be performed by a computer device, or may be performed by a component (for example, a processor, a chip, or a chip system) of the computer device. The method includes: obtaining a first data flow and a second data flow, where a priority of the first data flow is higher than a priority of the second data flow, the first data flow is transmitted by using a first queue, and the second data flow is transmitted by using a second queue; obtaining a transmission feature of the first data flow in the first queue, where the transmission feature is related to a moment at which a packet in the first data flow arrives at the first queue; and scheduling the second queue based on the transmission feature.

In this embodiment of this application, the first queue for transmitting the first data flow and the second queue for transmitting the second data flow are determined, and the priority of the first data flow is higher than the priority of the second data flow. In addition, the transmission feature of the first data flow in the first queue is considered in a second queue scheduling process, to reduce overstock, of the second data flow scheduled out of the second queue, in a bottom-layer queue. In other words, a moment at which the first data flow arrives at the first queue is considered when the second queue is scheduled, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

Optionally, in a possible implementation of the first aspect, the transmission feature is a transmission periodicity of the first data flow; and the scheduling the second queue based on the transmission feature includes: determining a first time period based on the transmission periodicity, where duration of the first time period is less than duration of the transmission periodicity, and the first time period is between moments at which adjacent packets in the first data flow arrive at the first queue; and scheduling the second queue to transmit the second data flow in the first time period.

In this possible implementation, the first time period in which the second data flow is transmitted by using the second queue is determined based on the transmission periodicity of the first data flow, because the duration of the first time period is less than the duration of the transmission periodicity, and the first time period is between the moments at which adjacent packets in the first data flow arrive at the first queue. In other words, a difference between an end moment of the first time period and an arrival moment of a next packet in the first data flow is greater than or equal to a first preset time period. The difference between the end moment of the first time period and the arrival moment of the next packet in the first data flow may be understood as an exhausting time period, and is used to exhaust a packet in the second data flow from the network adapter queue, to reduce overstock of the packet in the second data flow in the network adapter queue, reduce impact of the packet in the second data flow on transmission of a packet in the first data flow, and reduce a transmission delay of the first data flow in the bottom-layer queue.

Optionally, in a possible implementation of the first aspect, the foregoing step further includes: determining, based on a quantity of packets in the first queue, a start moment at which the second data flow is transmitted by using the second queue; and the scheduling the second queue based on the transmission feature includes: scheduling the second queue based on the transmission feature and the start moment.

In this possible implementation, the start moment at which the second data flow is transmitted by using the second queue is determined based on the quantity of packets in the first queue. In this way, subsequent overstock of the second data flow in the bottom-layer queue is reduced, and impact of the second data flow in the bottom-layer queue on a delay of the first data flow is reduced.

Optionally, in a possible implementation of the first aspect, the start moment is determined based on the quantity of packets in the first data flow in the first queue.

In this possible implementation, the start moment may be a moment at which the quantity of packets in the first data flow in the first queue is less than a threshold, or may be obtained by adding a time period to a moment at which the quantity of packets in the first data flow in the first queue is less than the threshold.

Optionally, in a possible implementation of the first aspect, a moment at which the quantity of packets in the first data flow in the first queue is less than a preset threshold is a first moment, a difference between the start moment and the first moment is positively correlated with a size of the first data flow, and the size of the first data flow includes at least one of the following: a total quantity of bytes and a quantity of packets.

In this possible implementation, a difference between the first moment and the start moment is positively correlated with a size of the first data flow. The size of the first data flow includes at least one of the following: a total quantity of bytes, a quantity of packets, and the like. For example, a larger quantity of packets in the first data flow indicates a larger second preset time period. In this way, there is enough time to exhaust, from the bottom-layer queue, the first data flow that has entered, to reduce impact on transmission of the first data flow after the second data flow subsequently enters the bottom-layer queue.

Optionally, in a possible implementation of the first aspect, the step of scheduling the second queue based on the transmission feature and the start moment includes: when the second queue is in a sending periodicity, scheduling the second queue to transmit the second data flow, where the sending periodicity is determined based on the start moment and the transmission feature.

In this possible implementation, the sending periodicity of the second queue is determined based on the start moment and the transmission feature. Because the start moment is used to determine t, and the transmission feature is used to determine dt, the second data flow is transmitted by using the second queue in [t, t+dt].

Optionally, in a possible implementation of the first aspect, the foregoing step further includes: obtaining statistical information related to a network adapter driver, where the statistical information includes at least one of the following parameters within a preset time period: quality of service QoS of the first data flow, network adapter utilization, queuing duration of a driver queue, and the like, the driver queue is used to receive data from the first queue and the second queue, and the network adapter driver is connected to the computer device; and updating the first time period based on the statistical information, to obtain a second time period, where the second time period is used to ensure that the parameter in the statistical information falls within a preset range, and the second time period is used to schedule the second queue.

In this possible implementation, the first time period in which the second data flow is transmitted by using the second queue may be dynamically adjusted based on statistical information at a network adapter. In this way, a transmission time period of the second queue is reversely adjusted based on a specific situation in which the network adapter transmits a data flow, to reduce overstock of the second data flow in the network adapter queue, and reduce a transmission delay of the first data flow.

Optionally, in a possible implementation of the first aspect, the first data flow is a delay-sensitive service, and the second data flow is a bandwidth-sensitive service.

In this possible implementation, the method is applicable to a scenario in which both a delay-sensitive service and a bandwidth-sensitive service are transmitted.

Optionally, in a possible implementation of the first aspect, the first queue and the second queue are located on a same computer device or different computer devices.

In this possible implementation, the method is not only applicable to be performed in one computer device, but also applicable to be performed in different computer devices.

A second aspect of embodiments of this application provides a computer device. The computer device may be applied to a scenario in which both a delay-sensitive service and a bandwidth-sensitive service are transmitted, and the like. The computer device includes: an obtaining unit, configured to obtain a first data flow and a second data flow, where a priority of the first data flow is higher than a priority of the second data flow, the first data flow is transmitted by using a first queue, and the second data flow is transmitted by using a second queue, where the obtaining unit is further configured to obtain a transmission feature of the first data flow in the first queue, where the transmission feature is related to a moment at which a packet in the first data flow arrives at the first queue; and a scheduling unit, configured to schedule the second queue based on the transmission feature.

Optionally, in a possible implementation of the second aspect, the transmission feature is a transmission periodicity of the first data flow; the scheduling unit is specifically configured to determine a first time period based on the transmission periodicity, where duration of the first time period is less than duration of the transmission periodicity, and the first time period is between moments at which adjacent packets in the first data flow arrive at the first queue; and the scheduling unit is specifically configured to schedule the second queue to transmit the second data flow in the first time period.

Optionally, in a possible implementation of the second aspect, the computer device further includes: a determining unit, further configured to determine, based on a quantity of packets in the first queue, a start moment at which the second data flow is transmitted by using the second queue. The scheduling unit is specifically configured to schedule the second queue based on the transmission feature and the start moment.

Optionally, in a possible implementation of the second aspect, the start moment is determined based on the quantity of packets in the first data flow in the first queue.

Optionally, in a possible implementation of the second aspect, a moment at which the quantity of packets in the first data flow in the first queue is less than a preset threshold is a first moment, a difference between the start moment and the first moment is positively correlated with a size of the first data flow, and the size of the first data flow includes at least one of the following: a total quantity of bytes and a quantity of packets.

Optionally, in a possible implementation of the second aspect, the scheduling unit is specifically configured to: when the second queue is in a sending periodicity, scheduling the second queue to transmit the second data flow. The sending periodicity is determined based on the start moment and the transmission feature.

Optionally, in a possible implementation of the second aspect, the obtaining unit is further configured to obtain statistical information related to a network adapter driver. The statistical information includes at least one of the following parameters within a preset time period: quality of service QoS of the first data flow, network adapter utilization, and queuing duration of a driver queue, the driver queue is used to receive data from the first queue and the second queue, and the network adapter driver is connected to the computer device. The computer device further includes: an updating unit, configured to update the first time period based on the statistical information, to obtain a second time period. The second time period is used to ensure that the parameter in the statistical information falls within a preset range, and the second time period is used to schedule the second queue.

Optionally, in a possible implementation of the second aspect, the first data flow is a delay-sensitive service, and the second data flow is a bandwidth-sensitive service.

Optionally, in a possible implementation of the second aspect, the first queue and the second queue are located on a same computer device or different computer devices.

A third aspect of this application provides a computer device, including a processor. The processor is coupled to a memory, and the memory is configured to store a program or instructions. When the program or the instructions are executed by the processor, the computer device is enabled to implement the method in any one of the first aspect or the possible implementations of the first aspect.

A fourth aspect of this application provides a computer-readable medium. The computer-readable medium stores a computer program or instructions. When the computer program or the instructions are run on a computer, the computer is enabled to perform the method in any one of the first aspect or the possible implementations of the first aspect.

A fifth aspect of this application provides a computer program product. When the computer program product is executed on a computer, the computer is enabled to perform the method in any one of the first aspect or the possible implementations of the first aspect.

A sixth aspect of embodiments of this application provides a chip system. The chip system includes at least one processor, configured to support a computer device to implement functions according to any one of the first aspect or the possible implementations of the first aspect.

In a possible design, the chip system further includes a memory. The memory is configured to store program instructions and data that are necessary for the computer device. The chip system may include a chip, or may include a chip and another discrete component. Optionally, the chip system further includes an interface circuit, and the interface circuit provides program instructions and/or data for the at least one processor.

For technical effects brought by the second aspect, the third aspect, the fourth aspect, the fifth aspect, the sixth aspect, or any possible implementation thereof, refer to technical effects brought by the first aspect or different possible implementations of the first aspect. Details are not described herein again.

It can be learned from the foregoing technical solutions that this application has the following advantages: The first queue for transmitting the first data flow and the second queue for transmitting the second data flow are determined, and the priority of the first data flow is higher than the priority of the second data flow. In addition, the second queue is scheduled based on the transmission feature of the first data flow in the first queue, to reduce overstock, of the second data flow scheduled out of the second queue, in the bottom-layer queue. In other words, a moment at which the first data flow arrives at the first queue is considered when the second queue is scheduled, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

### BRIEF DESCRIPTION OF DRAWINGS

FIG. 1A is a diagram of an application scenario according to an embodiment of this application;
FIG. 1B is a diagram of another application scenario according to an embodiment of this application;
FIG. 2 is a diagram of scheduling of different types of services according to an embodiment of this application;
FIG. 3 is another diagram of scheduling of different types of services according to an embodiment of this application;
FIG. 4 is a diagram of a deployment scenario according to an embodiment of this application;
FIG. 5 is another diagram of a deployment scenario according to an embodiment of this application;
FIG. 6 is a schematic flowchart of a data flow scheduling method according to an embodiment of this application;
FIG. 7 is a diagram of a first data flow and a second data flow according to an embodiment of this application;
FIG. 8 is another diagram of a first data flow and a second data flow according to an embodiment of this application;
FIG. 9 is another diagram of a first data flow and a second data flow according to an embodiment of this application;
FIG. 10 is a diagram of a scheduling rule for a first data flow and a second data flow according to an embodiment of this application;
FIG. 11 is a schematic flowchart of dynamically updating a first time period according to an embodiment of this application;
FIG. 12 is another schematic flowchart of dynamically updating a first time period according to an embodiment of this application;
FIG. 13 is a schematic flowchart of collecting statistics on a parameter of a traffic model in the deployment scenario shown in FIG. 5;
FIG. 14 is a schematic flowchart of delivering a scheduling rule in the deployment scenario shown in FIG. 5;
FIG. 15 is a schematic flowchart of scheduling a high-priority queue according to an embodiment of this application;
FIG. 16 is a schematic flowchart of scheduling a low-priority queue according to an embodiment of this application;
FIG. 17 is a diagram of a structure of a computer device according to an embodiment of this application; and
FIG. 18 is a diagram of a structure of a computer device according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.

### 1. Near-field distributed service

The near-field distributed service is a service in which a plurality of devices interact through near field communication such as a wireless fidelity (wireless fidelity, Wi-Fi) local area network, a peer-to-peer (peer-to-peer, P2P) network connection, and Bluetooth.

### 2. Multi-screen collaboration

Multi-screen collaboration is a distributed technology, and may implement cross-system and cross-device collaboration. For example, a mobile phone is connected to a computer or a tablet computer, to implement resource sharing, a collaborative operation, or the like.

### 3. Delay-sensitive task and bandwidth-sensitive task

The delay-sensitive task is a service that is sensitive to a delay, and is usually a service with a high priority, or a service that has a large amount of continuous traffic in a short time period (namely, a traffic burst) and that a user has a high requirement for the delay, for example, a projection service, a video/voice call service, a game battle service, a distributed camera service, a multi-screen collaboration service, a live streaming service, a news browsing service, an online shopping service, an electronic payment service, or a two-dimensional code scanning service.

The bandwidth-sensitive task is a service that is sensitive to a bandwidth, and is usually a service with continuous heavy traffic (or referred to as a throughput service), or a service that a user has a low delay requirement and a high transmission amount requirement, for example, a file sharing service, an upload/download service, an application updating service, a web disk service, a distributed file service, or a video on demand service.

It may be understood that the delay-sensitive service and the bandwidth-sensitive service may be descriptions of different services, or may be descriptions of a same service (that is, a service may be essentially a delay-sensitive service and a bandwidth-sensitive service). If the delay-sensitive service and the bandwidth-sensitive service are descriptions of a same service, a classification may be selected based on an actual requirement. This is not specifically limited herein.

First, an application scenario to which a method provided in embodiments of this application is applicable is briefly described.

A data flow scheduling method provided in embodiments of this application is mainly applied to a scenario in which a first computer device and a second computer device perform service transmission. For ease of description, an example in which a computer device is a terminal device and a service includes a delay-sensitive service and a bandwidth-sensitive service is used for description subsequently. It may be understood that in an actual application, the computer device may be a cloud-side device, for example, a server or a virtual machine, and the service may be of another type. This is not specifically limited herein.

The terminal device may be a mobile terminal device, for example, a mobile phone (or referred to as a "cellular" phone, a mobile phone (mobile phone)), a computer, or a data card, for example, may be a portable, pocket-sized, handheld, computer built-in, or vehicle-mounted mobile apparatus, which exchanges language and/or data with a radio access network. For example, the terminal device is a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, a vehicle, an in-vehicle infotainment system, an intelligent terminal (for example, a smart television, a smartwatch, or smart glasses), or the like. The terminal device may alternatively be a wearable device and a terminal device in a next-generation communication system, for example, a 5G communication system, or a terminal device in a future evolved public land mobile network (public land mobile network, PLMN), or a terminal device in another communication system to be further developed in the 5G communication system.

In addition, there may be one or more second computer devices. An example in which the second computer device is one terminal device and an example in which the second computer device is two terminal devices are used for description below.

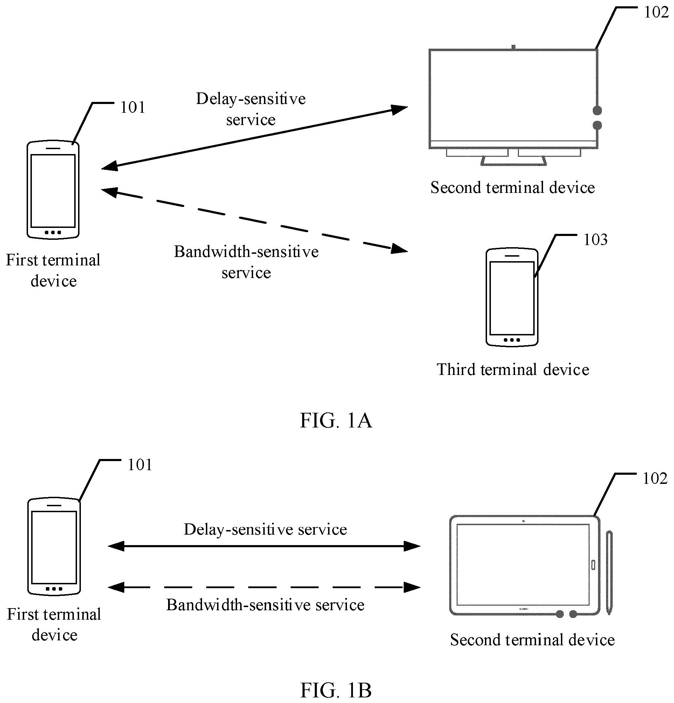

In a possible implementation, FIG. 1Ais a diagram of an application scenario according to an embodiment of this application. The application scenario includes a first terminal device 101, a second terminal device 102, and a third terminal device 103. The first terminal device 101 and the second terminal device 102 transmit a delay-sensitive service. The first terminal device 101 and the third terminal device 103 transmit a bandwidth-sensitive service. In other words, the first terminal device 102 separately transmits different service data to a plurality of terminal devices (namely, the second terminal device 102 and the third terminal device 103 in FIG. 1A).

In another possible implementation, FIG. 1B is a diagram of an application scenario according to an embodiment of this application. The application scenario includes a first terminal device 101 and a second terminal device 102. The first terminal device 101 and the second terminal device 102 transmit a delay-sensitive service and a bandwidth-sensitive service. In other words, the first terminal device 102 transmits a plurality of pieces of service data to a same terminal device (namely, the second terminal device 102 in FIG. 1B).

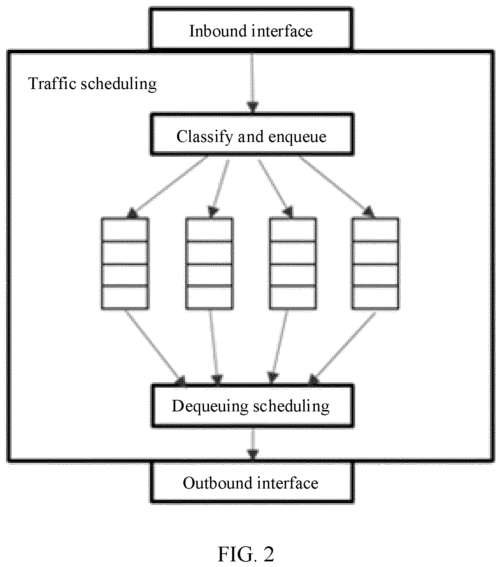

In the application scenario shown in FIG. 1A or FIG. 1B, because network resources are limited, network resources need to be properly planned and allocated based on features of various services for traffic scheduling, so that the network resources are efficiently used. As shown in FIG. 2, different types of data flows are enqueued in different queues for caching. The queue is scheduled during dequeuing, to control a dequeuing rate and sequence. In this way, quality of service of some high-priority services can be guaranteed.

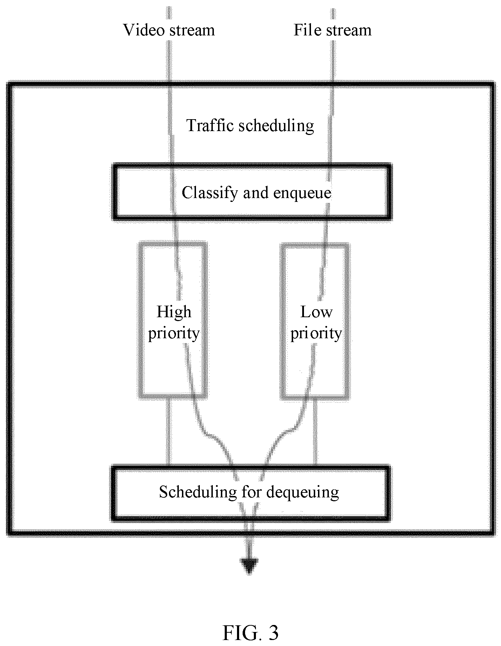

Currently, a common data flow scheduling method is shown in FIG. 3. When a delay-sensitive high-priority service and a low-priority high-throughput service (or a bandwidth-sensitive low-priority service) are concurrently performed, a packet of the high-priority service enters a high-priority queue, and a packet of the low-priority service enters a low-priority queue. A scheduling rule of an absolute priority is used during scheduling, so that the packet of the high-priority service is first dequeued, to reduce a queuing delay of the high-priority service. A packet in the low-priority queue is scheduled for sending only when there is no packet in the high-priority queue.

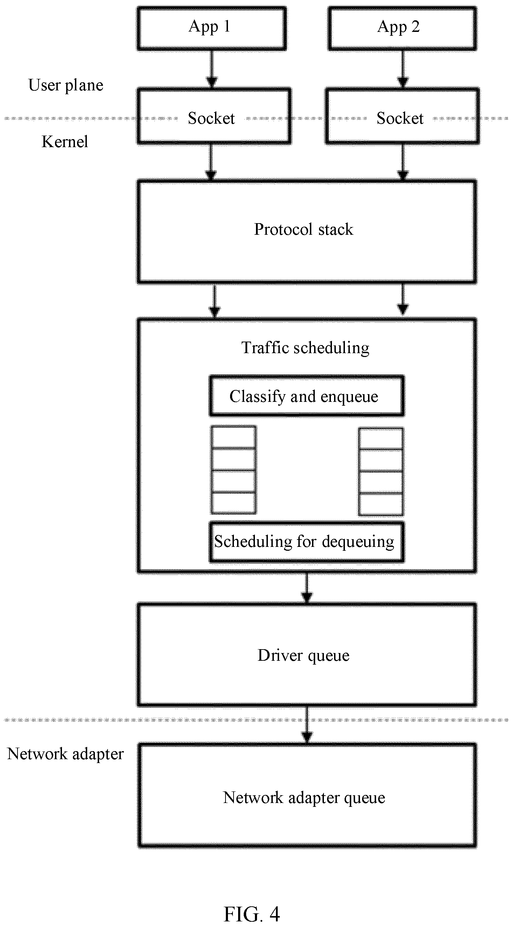

However, in a scenario of a Linux operating system (as shown in FIG. 4), the queue involved in FIG. 3 is only in traffic scheduling shown in FIG. 4. In other words, the scheduling method shown in FIG. 3 is only in a queuing discipline (queuing discipline, qdisc). It can be learned from FIG. 4 that, after being scheduled based on the qdisc, a packet in a data flow further needs to pass through a plurality of levels of queues before being actually sent from a network adapter. Packets of two services in a bottom-layer queue (for example, a driver queue and a network adapter queue in FIG. 4) may queue in a same queue or may be separated in different queues, but a high-priority packet does not necessarily have an absolute priority. In this way, a high-priority packet that is preferentially scheduled based on the qdisc is still affected by a low-priority packet that is already queued in the bottom-layer queue.

Therefore, in the scheduling method shown in FIG. 3, in the scenario shown in FIG. 4, how to reduce an increase that is in a transmission delay of a high-priority packet and that is caused by overstock of a low-priority packet in the bottom-layer queue is a technical problem to be urgently resolved.

To resolve the foregoing problem, embodiments of this application provide the data flow scheduling method. The method is mainly applied to how to schedule a data flow corresponding to a service when a transmit end (namely, the first terminal device 101) transmits a service to the second terminal device 102 and the third terminal device 103. Specifically, a first queue for transmitting a first data flow and a second queue for transmitting a second data flow are determined, and a priority of the first data flow is higher than a priority of the second data flow. In addition, the second queue is scheduled based on a transmission feature of the first data flow in the first queue, to reduce overstock, of the second data flow scheduled out of the second queue, in a bottom-layer queue. In other words, a moment at which the first data flow arrives at the first queue is considered when the second queue is scheduled, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

Before the data flow scheduling method provided in embodiments of this application is described, a deployment scenario provided in embodiments of this application is first described. This deployment scenario is improved based on FIG. 4, to reduce an increase that is in a transmission delay of a high-priority packet and that is caused by overstock of a low-priority packet in the bottom-layer queue.

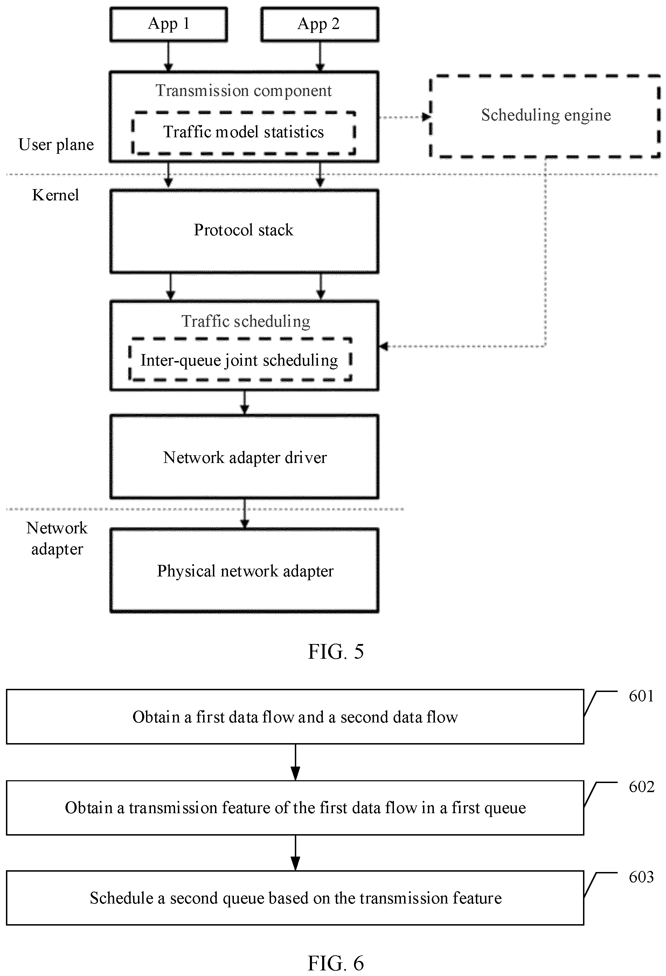

As shown in FIG. 5, the data flow scheduling method provided in embodiments of this application may be included in operating system software of a computer device, and is deployed in program code on hardware of the computer device. The computer device includes a user plane, a kernel, and a network adapter connected to the computer device. A transmission component on the user plane provides a transmission interface for an app (for example, an app 1 and an app 2), and may run in an application process. The transmission component encapsulates a transport layer socket, and provides a transmission interface (for example, a file transfer interface and a flow transmission interface) for a data flow of the app. Inside the transmission component, a traffic model statistics collection module collects statistics on the data flow from the app (for example, a first data flow from the app 1 and a second data flow from the app 2), to obtain a statistical result (for example, service type identification of the data flow, a quintuple of a packet in the data flow, a frame interval, a frame interval standard deviation, and an average frame size). A scheduling engine module on the user plane determines, based on the statistical result, whether to enable an inter-queue joint scheduling rule (namely, whether to schedule the second queue based on the transmission feature of the first data flow in the first queue). After determining to enable the inter-queue joint scheduling rule, a scheduling engine sends priority information (for example, the priority information indicates that the priority of the first data flow is higher than the priority of the second data flow, or indicates that the first queue is a high-priority queue and the second queue is a low-priority queue) of the data flow and configuration information to a traffic scheduling module. The configuration information includes a start moment t (or understood as a start moment of a sending window of the second queue) at which the second data flow is transmitted by using the second queue and a time period dt. Therefore, the traffic scheduling module schedules the second queue to open the sending window in a time period [t, t+dt], to transmit the second data flow. The start moment t is related to a quantity of packets in the first data flow in the first queue. The time period dt is related to the transmission feature (for example, a transmission periodicity of the first data flow) of the first data flow, and the transmission feature may be used to determine the moment at which a packet in the first data flow arrives at the first queue.

In addition, the scheduling engine module may further invoke a system interface to obtain statistical information (for example, a round-trip time of the first data flow, a jitter of the first data flow, a network adapter rate, a quantity of sent bytes, network adapter utilization, and queuing duration of a driver queue) of a network adapter driver. In addition, the time period dt is updated based on the statistical information, and the second queue is scheduled based on the updated time period dt.

It can be learned that a sending window of a priority queue (that is, the second queue) is dynamic, and depends on a sending status of the high-priority queue. Sending of the low-priority queue is enabled within a period of time after a quantity of packets in the high-priority queue is less than a threshold, to reduce an average delay of transmitting the first data flow by using a high priority, and reduce frame freezing and frame loss of the first data flow. In other words, the moment at which the first data flow arrives at the first queue is considered when the second queue is scheduled, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

The following describes the data flow scheduling method provided in embodiments of this application. The method may be performed by a computer device, or may be performed by a component (for example, a processor, a chip, or a chip system) of the computer device. In embodiments of this application, only an example in which the computer device is a terminal device is used for description. It may be understood that the computer device may alternatively be a server, or the like. This is not specifically limited herein. In addition, data in a data flow in embodiments of this application may be a text, an image, audio/video, or the like. This is not specifically limited herein.

FIG. 6 is a schematic flowchart of a data flow scheduling method according to an embodiment of this application. The method may be applied to the deployment scenario shown in FIG. 5. The method may include step 601 to step 603. The following describes step 601 to step 603 in detail.

Step 601: Obtain a first data flow and a second data flow.

In this embodiment of this application, a computer device obtains the first data flow and the second data flow in a plurality of manners. The first data flow and the second data flow may be uploaded by a user, may be obtained from an application (Application, App), may be selected from a database, or the like. This is not specifically limited herein. A priority of the first data flow is higher than a priority of the second data flow.

In addition, the first data flow and the second data flow may belong to a same service type or different service types. In this embodiment of this application, only an example in which the first data flow and the second data flow belong to different services is used as an example for description.

Optionally, a service type to which a data flow belongs may be determined based on an interface number of the data flow and a traffic identification feature. The traffic identification feature includes at least one of the following: a network adapter identifier, a source internet protocol (Internet Protocol, IP) address, a destination IP address, a source port, a destination port, a type of service (type of service, TOS) field, a differentiated services code point (differentiated services code point, DSCP) field, and the like.

Optionally, a DSCP field value corresponding to the first data flow (flow transmission) is different from a DSCP field value corresponding to the second data flow (file transfer). A DSCP value of a data flow can also be used to distinguish between a high-priority packet and a low-priority packet.

Optionally, the first data flow belongs to a delay-sensitive service, for example, a projection service, a Bluetooth music service, a video/voice call service, a game battle service, a distributed camera service, a multi-screen collaboration service, a live streaming service, a news browsing service, an online shopping service, an electronic payment service, or a two-dimensional code scanning service. The second data flow belongs to a bandwidth-sensitive service, for example, a file sharing service, a data upload/download service, an application updating service, a web disk service, a distributed file service, or a video on demand service. In an actual application, there may be another example of the delay-sensitive service and the bandwidth-sensitive service. This is not specifically limited herein.

In this step, the first data flow is transmitted by using a first queue, and the second data flow is transmitted by using a second queue. In addition, the computer device determines the first queue and the second queue in a plurality of manners. A queue for transmitting a data flow may be determined based on an interface number of the data flow (for example, a number corresponding to a transmission interface provided by a transmission component for different apps). Alternatively, a queue for transmitting a data flow may be determined based on an identifier carried in the data flow. Alternatively, a queue for transmitting a data flow may be determined based on a special field of a packet in the data flow. This is not specifically limited herein.

Data in the first queue and the second queue is transmitted out by using a bottom-layer queue (for example, a network adapter queue).

For example, a first mapping table shown in Table 1 is preset on the computer device, and the first mapping table indicates an association relationship between an interface number and a queue. It is assumed that in step 601, a user plane of the computer device receives the first data flow from the app 1 through an interface 1#, and receives the second data flow from the app 1 through the interface 2#. In this step, the computer device determines, based on the first mapping table, that a queue corresponding to the interface 1# is the first queue, to determine that the queue for transmitting the first data flow is the first queue. Similarly, it is determined that the queue for transmitting the second data flow is the second queue.

**Table 1**

| Interface number of a data flow | Queue corresponding to the interface number |
|---|---|
| 1 | First queue |
| 2 | Second queue |

It may be understood that a manner of determining a queue based on the identifier carried in the data flow or the special field of the packet in the data flow is similar to that in the example corresponding to Table 1. Details are not described herein again.

In addition, a sequence between step 601 and step 601 is not limited in this embodiment of this application. For example, step 602 is performed after step 601. In this example, in step 602, the queue for transmitting the first data flow may be determined based on related information (for example, the identifier in the data flow or the special field of the packet in the data flow) of the first data flow. For another example, step 602 is performed before step 601. In this example, in step 602, the queue may be determined based on the interface number. To be specific, the queue for transmitting the data flow may be determined directly based on the interface number without identifying the data flow transmitted by using the interface number.

Step 602: Obtain a transmission feature of the first data flow in the first queue.

After determining the first queue, the computer device may obtain the transmission feature of the first data flow in the first queue. The transmission feature is related to a moment at which a packet in the first data flow arrives at the first queue. It may also be understood that the transmission feature may be used to determine the moment at which the packet in the first data flow arrives at the first queue.

Optionally, the transmission feature may be related to adjacent packets in the first data flow (for example, a packet interval), or may be related to N adjacent packets in the first data flow, where N is a positive integer greater than 1. This is not specifically limited herein.

It may be understood that, for a first data flow without a fixed transmission periodicity, the transmission feature may also include a rule of moments at which packets in the data flow arrive at the first queue (for example, a packet interval between an n^{th} packet and an (n-1)^{th} packet in the first data flow is 20 milliseconds, and a packet interval between the n^{th} packet and an (n+1)^{th} packet is 5 milliseconds).

Step 603: Schedule the second queue based on the transmission feature.

After obtaining the transmission feature, the computer device may schedule the second queue based on the transmission feature.

Optionally, that the transmission feature is the transmission periodicity of the first data flow is used as an example. The computer device may first determine the first time period, and schedule the second queue to transmit the second data flow in the first time period. Duration of the first time period is less than duration of the transmission periodicity, and the first time period is between moments at which adjacent packets in the first data flow arrive at the first queue. The first time period may be understood as dt shown in FIG. 5.

A difference between an end moment of the first time period and an arrival moment of a next packet in the first data flow is greater than or equal to a first preset time period. The difference between the end moment of the first time period and the arrival moment of the next packet in the first data flow may be understood as an exhausting time period, and is used to exhaust a packet in the second data flow from the network adapter queue, to reduce overstock of the packet in the second data flow in the network adapter queue, reduce impact of the packet in the second data flow on transmission of the packet in the first data flow, and reduce a transmission delay of the first data flow in the bottom-layer queue.

Optionally, the bottom-layer queue may be a network adapter queue. The bottom-layer queue receives data flows transmitted by using the first queue and the second queue, and transmits the data flows to another device that communicates with the computer device.

In addition, the computer device may further obtain a start moment. The start moment is a moment at which the second queue starts to transmit the second data flow. The start moment may be a preset moment, or may be a moment determined based on a quantity of packets in the first queue, or the like. This is not specifically limited herein. A difference between a moment (namely, the first moment) at which the quantity of packets in the first queue is less than a preset threshold and the start moment at which the second data flow is transmitted by using the second queue is a second preset time period. For example, when the second preset time period is 0, the moment at which the quantity of packets in the first queue is less than the preset threshold is the start moment at which the second data flow is transmitted by using the second queue. For another example, when the second preset time period is not 0, a moment obtained by adding the second preset time period to the moment at which the quantity of packets in the first queue is less than the preset threshold is the start moment at which the second data flow is transmitted by using the second queue.

Optionally, in a sending periodicity of the second queue, the second queue is scheduled to transmit the second data flow. The sending periodicity is determined based on the start moment and the transmission feature (or the first time period). The sending periodicity may also be understood as [t, t+dt].

Optionally, a difference (namely, the second preset time period) between the first moment and the start moment is positively correlated with a size of the first data flow. The size of the first data flow includes at least one of the following: a total quantity of bytes, a quantity of packets, and the like. For example, a larger quantity of packets in the first data flow indicates a larger second preset time period. In this way, there is enough time to exhaust, from the bottom-layer queue, the first data flow that has entered, to reduce impact on transmission of the first data flow after the second data flow enters the bottom-layer queue.

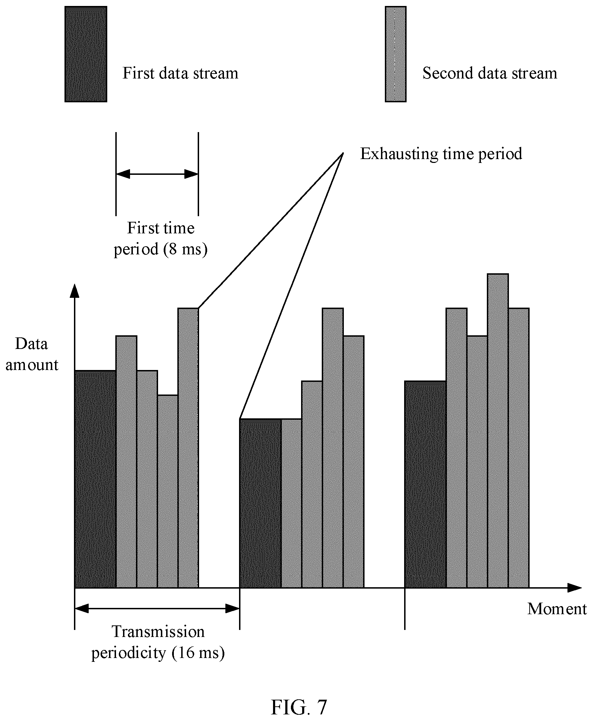

Example 1: A process of transmitting the first data flow and the second data flow is shown in FIG. 7. A horizontal coordinate represents a moment, and a vertical coordinate represents a data amount (for example, a quantity of packets or a quantity of bytes). Each vertical block represents one or more packets. The transmission periodicity of the first data flow is 16 milliseconds (ms), and the first time period is 8 ms (less than the transmission periodicity of the first data flow). A 1^{st} transmission periodicity of the first data flow in FIG. 7 is used as an example. It can be learned that a start moment of the first time period is a moment at which transmitting the first data flow packet by using the first queue is completed (that is, the second preset time period is 0 ms). An interval between an end moment of the first time period and a next transmission periodicity of the first data flow is 4 ms (that is, the first preset time period is 4 ms). The first preset time period may be understood as the exhausting time period.

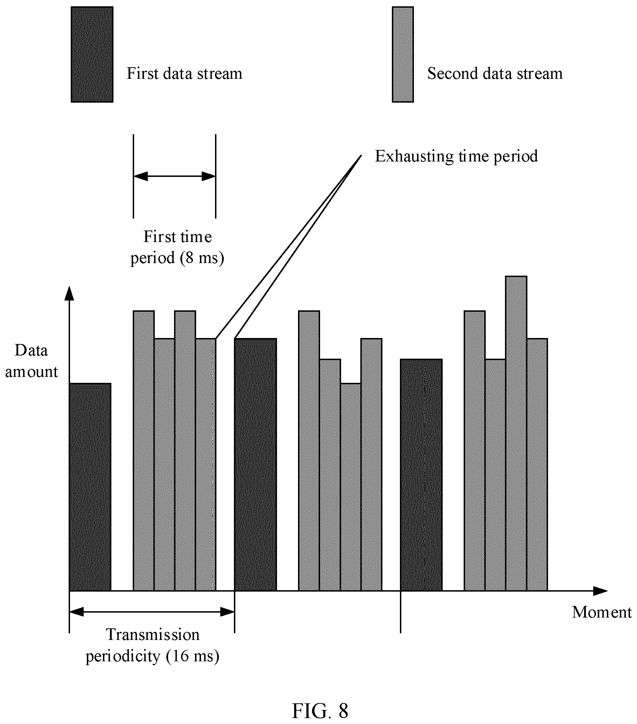

Example 2: A process of transmitting the first data flow and the second data flow is shown in FIG. 8. A horizontal coordinate represents a moment, and a vertical coordinate represents a data amount (for example, a quantity of packets or a quantity of bytes). The transmission periodicity of the first data flow is 16 milliseconds (ms), and the first time period is 8 ms (less than the transmission periodicity of the first data flow). A 1^{st} transmission periodicity of the first data flow in FIG. 8 is used as an example. It can be learned that a start moment of the first time period is a moment obtained by adding the second preset time period to a moment at which transmitting the first data flow packet by using the first queue is completed (that is, the second preset time period is 2 ms). An interval between an end moment of the first time period and a next transmission periodicity of the first data flow is 2 ms (that is, the first preset time period is 2 ms). The first preset time period may be understood as the exhausting time period.

A difference between Example 1 and Example 2 lies in whether the second queue is immediately scheduled to transmit the second data flow after transmitting the packet in the first data flow packet by using the first queue is completed in a period. In a case of Example 1, the second queue is immediately scheduled to transmit the second data flow after transmitting the packet in the first data flow packet by using the first queue is completed. In a case of Example 2, after transmitting the packet in the first data flow packet by using the first queue is completed, after an interval of 2 ms (namely, the second preset time period), the second queue is scheduled to transmit the second data flow.

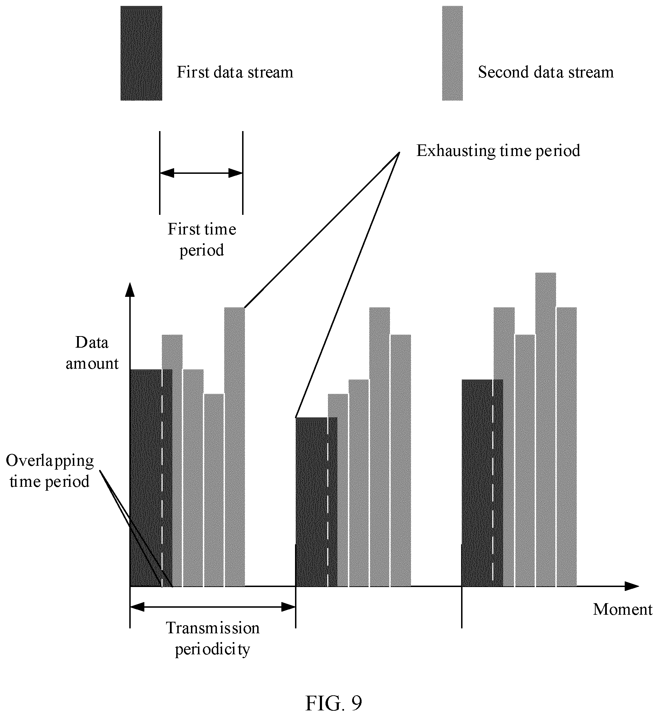

It may be understood that FIG. 7 and FIG. 8 are merely examples. In an actual application, there may be another case in the process of transmitting the first data flow and the second data flow. For example, as shown in FIG. 9, at the start moment at which the second data flow is transmitted by using the second queue, the packet in the first data flow may be further transmitted by using the first queue. That is, there may be an overlapping time period in which the first queue and the second queue transmit a data flow. A specific transmission process of the first data flow and the second data flow is not limited herein.

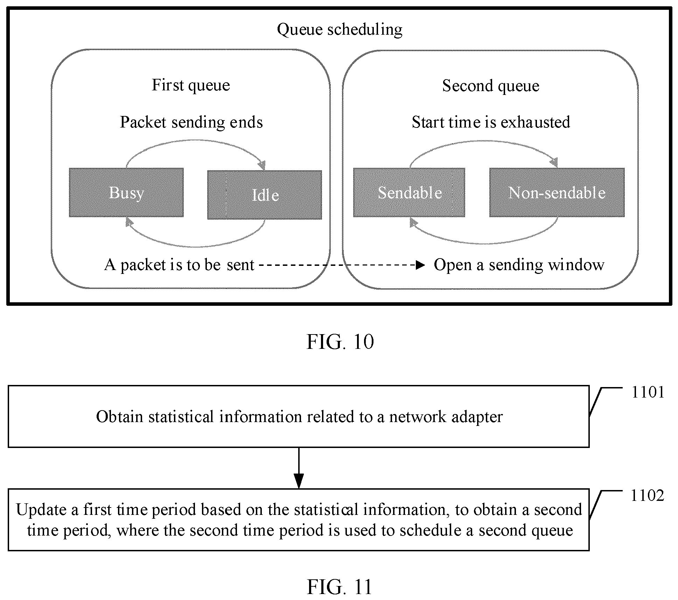

For example, a specific scheduling process may be shown in FIG. 10. The first queue is a priority queue, and the second queue is a low-priority queue. The first queue has two states: a busy state and an idle state. The busy state indicates that a packet in the first data flow in the first queue needs to be transmitted. The idle state indicates that there is no packet in the first data flow in the first queue or the quantity of packets in the first data flow in the first queue is less than the preset threshold. The second queue has two states: a sendable state and a non-sendable state. The sendable state indicates that the second queue is within the sending periodicity [t, t+dt]. The non-sendable state indicates that the second queue is not within the sending periodicity. It can be learned from FIG. 10 that the first queue enters the idle state after each time packet sending is completed. When it is detected that a new packet in the first data flow enters the first queue, the first queue changes to the busy state, and sends a signal to the second queue. The second queue opens a sending window, the sending window lasts for the first time period before ending.

It may be understood that, states of the first queue and the second queue in FIG. 10 are merely examples. In an actual application, the first queue and the second queue may alternatively be in another state. For example, states of the second queue may further include the non-sendable state, a rate limited state, a full-rate state, and the like. The rate-limited state indicates that a rate at which a packet is transmitted by using the second queue is less than a preset rate. The full-rate state indicates that a rate at which a packet is transmitted by using the second queue is a maximum rate supported by hardware, or the like.

In this embodiment of this application, when scheduling is performed based on a queuing discipline (queuing discipline, qdisc), the high-priority packet can be dequeued earlier than a packet overstocked in a low-priority queue, so that impact of the low-priority service on the high-priority service can be reduced to some extent. Specifically, the first time period in which the second data flow is transmitted by using the second queue is determined based on the transmission feature of the first data flow. The duration of the first time period is less than the duration of the transmission periodicity, and the first time period is between moments at which adjacent packets in the first data flow arrive at the first queue. To be specific, the difference between the end moment of the first time period and the arrival moment of the next packet in the first data flow may be understood as an exhausting time period, and is used to exhaust a packet in the second data flow from the network adapter queue, to reduce overstock of the packet in the second data flow in the network adapter queue, reduce impact of the packet in the second data flow on transmission of the packet in the first data flow, and reduce a transmission delay of the first data flow in the bottom-layer queue and overall bandwidth utilization of transmitting the first data flow and the second data flow, so as to provide a proper data scheduling method. In addition, a moment at which the second data flow starts to be transmitted by using the second queue may be determined based on the quantity of packets in the first queue, to reduce interference of the second data flow in the bottom-layer queue to the first data flow.

In addition, the first queue and the second queue in this embodiment of this application may be located on a same computer device or different computer devices.

Further, because transmission of a data flow is dynamic, transmission of the data flow may be affected by another factor such as a network. Therefore, a first time period in which a second data flow is transmitted by using a second queue may be further dynamically adjusted based on statistical information at a network adapter. A specific procedure is shown in FIG. 11. A dynamic adjustment process includes step 1101 and step 1102, which are separately described below.

Step 1101: Obtain statistical information related to a network adapter driver.

A computer device may obtain, from the network adapter driver, the statistical information related to the network adapter driver. The statistical information includes at least one of the following parameters in a third preset time period: quality of service (quality of service, QoS) of a first data flow, network adapter utilization, queuing duration of a driver queue, an average sending rate of a network adapter queue, average queuing duration, and the like. The driver queue is used to receive data from a first queue and a second queue, and the network adapter driver is connected to the computer device. The queuing duration is queuing duration of a packet in the driver queue, and the sending rate is a rate at which a packet is sent by using the driver queue.

The QoS of the first data flow may include at least one of the following: a round-trip time of a packet (namely, a difference between a moment at which a packet is sent and a moment at which a response packet corresponding to the packet is received), a delay jitter (a jitter of round-trip times of different packets), and the like.

In addition, the at least one parameter may be directly obtained, or may be calculated by obtaining other information. For example, the other information may include a network adapter rate and a quantity of sent bytes. The network adapter utilization can be calculated based on the network adapter rate and the quantity of sent bytes. Specifically, a value obtained by dividing the quantity of sent bytes by the third preset time period is divided by the network adapter rate, and then the network adapter utilization rate is obtained. A specific obtaining manner of the statistical information is not limited herein.

Step 1102: Update a first time period based on the statistical information, to obtain a second time period, where the second time period is used to schedule the second queue.

After obtaining the statistical information related to the network adapter driver, the computer device updates the first time period based on the statistical information. The second time period is used to schedule the second queue. The second time period is used to ensure that a parameter in the statistical information falls within a preset range.

For example, when the parameter is the network adapter utilization, the preset range may be between 90% and 95%. When the parameter is an average queuing length of the driver queue, the preset range may be between 100 IP packets and 150 IP packets. When the parameter is the average sending rate, the preset range may be between 80 megabits per second (MB/s) and 90 MB/s.

This step may be understood as an adjustment of dt in the foregoing embodiment. For example, if the network adapter utilization, the average queuing length of the driver queue, or the average sending rate is greater than a target range, dt is decreased; or if the network adapter utilization, the average queuing length of the driver queue, or the average sending rate is not greater than a target range, dt is increased.

In this embodiment of this application, the first time period in which the second data flow is transmitted by using the second queue may be dynamically adjusted based on statistical information at a network adapter. In this way, a transmission time period of the second queue is reversely adjusted based on a specific situation in which the network adapter transmits a data flow, to reduce overstock of the second data flow in the network adapter queue, and reduce a transmission delay of the first data flow.

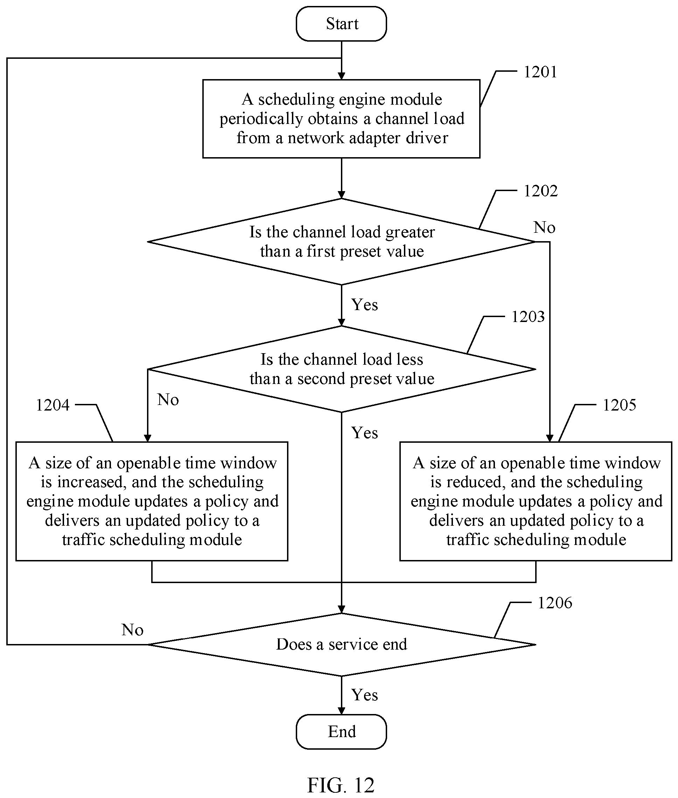

Optionally, an embodiment of this application further provides another specific process of updating the first time period. As shown in FIG. 12, the process is implemented after a scheduling policy is executed, and the process includes step 1201 to step 1206.

Step 1201: A scheduling engine module periodically obtains a channel load from a network adapter driver.

The scheduling engine module periodically obtains the channel load from the network adapter driver. The channel load indicates a proportion of channel busy time corresponding to the network adapter driver to total working time.

Step 1202: Determine whether the channel load is greater than a first preset value, and perform step 1203 if the channel load is greater than the first preset value, or perform step 1205 if the channel load is not greater than the first preset value.

After obtaining the channel load, the scheduling engine module determines whether the channel load is greater than the first preset value, and performs step 1203 if the channel load is greater than the first preset value, or performs step 1205 if the channel load is not greater than the first preset value.

Step 1203: Determine whether the channel load is less than a second preset value, and perform step 1206 if the channel load is less than the second preset value, or perform step 1204 if the channel load is not less than the second preset value.

When determining that the channel load is greater than the first preset value, the scheduling engine module determines whether the channel load is less than the second preset value, and performs step 1206 if the channel load is less than the second preset value, or performs step 1204 if the channel load is not less than the second preset value. The second preset value is greater than or equal to the first preset value.

Step 1202 and step 1203 may also be understood as being used to determine whether the channel load obtained by the scheduling engine module is between the first preset value and the second preset value (the second preset value is greater than the first preset value). It may also be understood that a preset range is between the first preset value and the second preset value.

Step 1204: A size of an openable time window is increased, and the scheduling engine module updates a policy and delivers an updated policy to a traffic scheduling module.

If it is determined that the channel load is greater than or equal to the second preset value, it indicates that an openable time window of a low-priority queue is too short, and the size of the openable time window needs to be increased. In other words, dt is increased until the channel load is within the preset range. In addition, adjusted dt is delivered to the traffic scheduling module.

Step 1205: A size of an openable time window is reduced, and the scheduling engine module updates a policy and delivers an updated policy to a traffic scheduling module.

If it is determined that the channel load is less than or equal to the first preset value, it indicates that an openable time window of a low-priority queue is too long, and the size of the openable time window needs to be reduced. In other words, dt is reduced until the channel load is within the preset range. In addition, adjusted dt is delivered to the traffic scheduling module.

Step 1206: Determine whether a service ends, and end this procedure if the service ends, or perform step 1201 to step 1206 again if the service does not end.

The traffic scheduling module determines whether transmission of service data is completed. If transmission of the service data is completed, a process of updating a time window is ended; or if transmission of the service data is not completed, step 1201 to step 1206 are repeatedly performed, until a preset condition is met. The preset condition includes at least one of the following: a quantity of times of updating the time window reaches a preset value, service transmission ends, or the like.

In this embodiment, the openable time window of the low-priority queue is adjusted in real time based on the proportion of the channel busy time corresponding to the network adapter driver to the total working time and the preset range, to reduce interference of second service data to a first data flow in a bottom-layer queue in advance, thereby ensuring low-delay transmission of the first data flow and overall bandwidth utilization of transmitting the first data flow and the second data flow, and providing a proper data scheduling method.

The following describes in detail, with reference to the accompanying drawings by using an example in which a first data flow is a multi-screen collaboration service and a second data flow is a file sharing service, a specific procedure in which FIG. 6 is applied to the deployment application shown in FIG. 5.

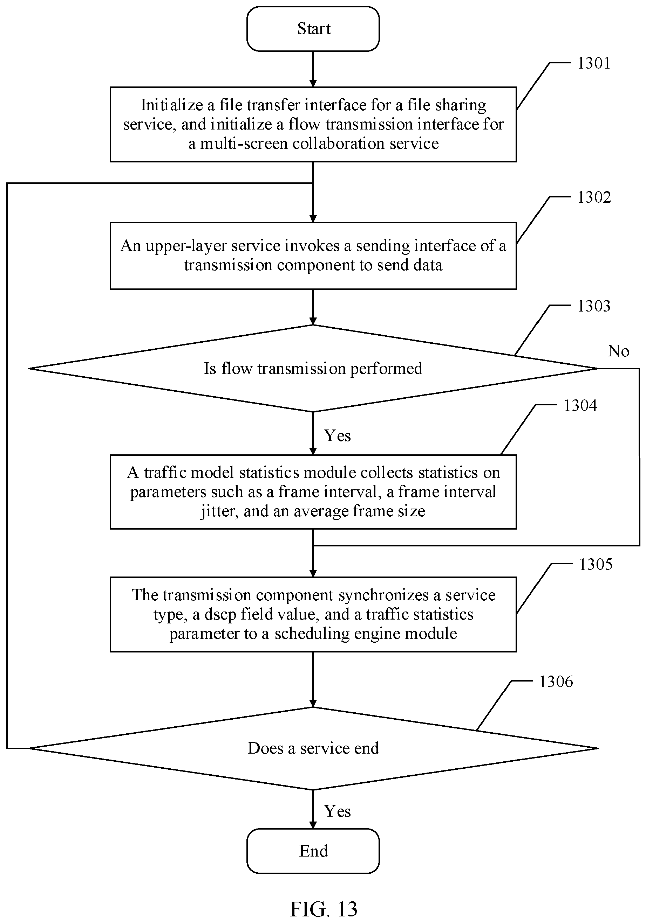

First, a process of collecting statistics on a parameter of a traffic model in the deployment scenario shown in FIG. 5 is described. As shown in FIG. 13, the process includes step 1301 to step 1306.

Step 1301: Initialize a file transfer interface for a file sharing service, and initialize a flow transmission interface for a multi-screen collaboration service.

Step 1302: An upper-layer service invokes a sending interface of a transmission component to send data.

Step 1301 and step 1302 may be understood as being performed when the upper-layer service sends service data by using the transmission component. The transmission component encapsulates a transport layer socket, to provide a file transfer interface and a flow transmission interface for file sharing and multi-screen collaboration. The transmission interfaces are respectively initialized for the file sharing service and the multi-screen collaboration service, and the sending interface of the transmission component is invoked to send the corresponding service data.

Step 1303: Determine whether flow transmission is performed for data, and perform step 1304 if flow transmission is performed for data, or perform step 1305 if flow transmission is not performed for data.

Further, a traffic scheduling module determines whether the service data from the sending interface of the transmission component is flow data. If the service data is flow data, step 1304 is performed. If the service data is not flow data, step 1305 is performed.

Optionally, as described in step 1302 in the embodiment shown in FIG. 13, whether flow data is transmitted through an interface based on whether the interface is a file transfer interface or a flow transmission interface. That is, data transmitted through the flow transmission interface is stream data.

Step 1304: A traffic model statistics module collects statistics on parameters such as a frame interval, a frame interval jitter, and an average frame size.

The traffic model statistics module collects statistics on the service data, to obtain a statistical result, for example, parameters such as the frame interval, the frame interval jitter (for example, a frame interval standard deviation), and the average frame size.

Step 1305: The transmission component synchronizes a service type, a DSTP field value, and a traffic statistics parameter to a scheduling engine module.

The transmission component determines the service type, the DSTP field value, and the traffic statistics parameter of the service data, and synchronizes the service type, the DSTP field value, and the traffic statistics parameter of the service data to the scheduling engine module, so that the scheduling engine module inputs the service data into a corresponding queue for transmission.

Optionally, different DSCP field values are respectively used for a file transfer and flow transmission. In this step, the DSTP is used to distinguish traffic of different types of services. Herein, other fields such as a network adapter identifier, a source IP address, a destination IP address, a source port, a destination port, a type of service (type of service, TOS) field, and a differentiated services code point (differentiated services code point, DSCP) may also be used to distinguish the traffic of different types of services.

Step 1306: Determine whether a service ends, and if the service ends, end a process of collecting statistics on the parameter of the traffic model.

The traffic scheduling module determines whether transmission of service data is completed. If transmission of service data is completed, the process of collecting statistics on the parameter of the traffic model is ended; or if transmission of the service data is not completed, step 1301 to step 1306 are repeatedly performed, until a preset condition is met. The preset condition includes at least one of the following: duration of collecting statistics on the parameter of the traffic model reaches preset duration, a data amount of collecting statistics on the parameter of the traffic model reaches a preset value, service transmission ends, and the like.

In this embodiment, an information collection process in the embodiments shown in FIG. 5 to FIG. 12 is provided. When the transmission component transmits the file sharing service and the multi-screen collaboration service, a frame interval of the multi-screen collaboration service is counted to determine a first time period, a frame interval jitter is counted to determine whether a scheduling condition is met, and an average frame size is counted to determine a second preset time period, to determine a time interval of traffic of a schedulable file sharing service, thereby reducing impact of the file sharing service on the multi-screen collaboration service and reducing a delay and frame freezing of the multi-screen collaboration service.

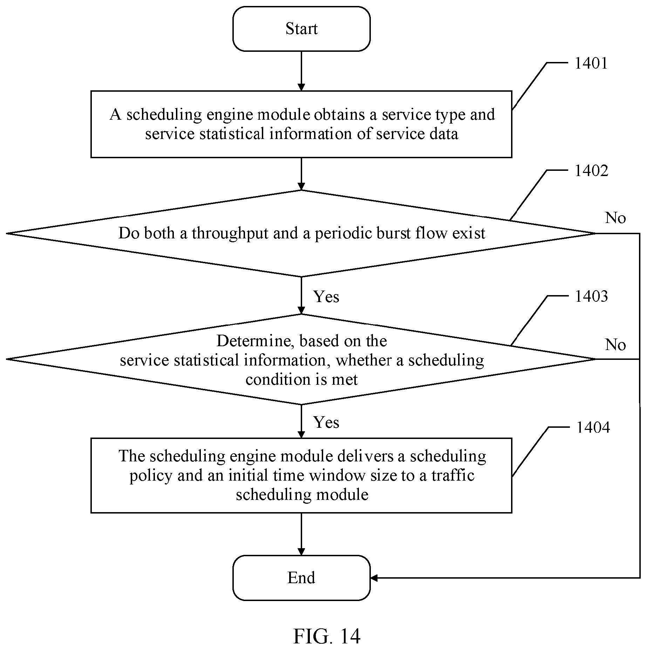

The following describes a process of delivering a scheduling rule in the deployment scenario shown in FIG. 5. The process may also be understood as a process of determining whether to trigger execution of step 604 in the embodiment shown in FIG. 6. As shown in FIG. 14, the process includes step 1401 to step 1404.

Step 1401: A scheduling engine module obtains a service type and service statistical information of service data.

The scheduling engine module obtains the service type and the service statistical information of the service data from a transmission component.

Step 1402: Determine whether both a throughput and a periodic burst flow exist, and perform step 1403 if both the throughput and the periodic burst flow exist, or deliver no scheduling rule if both the throughput and the periodic burst flow do not exist.

After obtaining the service type and the service statistical information of the service data from the transmission component, the scheduling engine module determines whether both the throughput and the periodic burst flow exist (or understood as both a delay-sensitive service and a bandwidth-sensitive service exist). Step 1403 is performed if both the throughput and the periodic burst flow exist; or no scheduling rule is delivered if both the throughput and the periodic burst flow do not exist.

Step 1403: Determine, based on the service statistical information, whether a scheduling condition is met, and perform step 1404 if the scheduling condition is met; or deliver no scheduling rule if the scheduling condition is not met.

After determining that both the delay-sensitive service and the bandwidth-sensitive service exist, the scheduling engine module determines, based on the service statistical information, whether the scheduling condition is met. The scheduling condition is that the delay-sensitive service has an approximate periodic burst feature.

Step 1402 and step 1403 may be understood as follows: Step 1404 is performed if both the delay-sensitive service and the throughput-type service exist, and the delay-sensitive service has the approximate periodic burst feature. No scheduling rule is delivered if both the delay-sensitive service and the throughput-type service do not exist, or the delay-sensitive service does not have the approximate periodic burst feature. The scheduling rule includes a scheduling policy and an initial time window size.

Step 1404: The scheduling engine module delivers the scheduling policy and the initial time window size to a traffic scheduling module.

When the scheduling engine module determines that the scheduling condition is met, the scheduling engine module delivers the scheduling policy and the initial time window size to the traffic scheduling module. The scheduling policy is used to determine a start moment at which the bandwidth-sensitive service (namely, the second data flow) is transmitted by using a low-priority queue (namely, a second queue). The initial time window size may be understood as a first time period in the embodiment shown in FIG. 6.

Then, the traffic scheduling module schedules the low-priority queue based on the scheduling policy and the initial time window size that are delivered by the scheduling engine module. Specifically, the traffic scheduling module first determines a transmission time period of the low-priority queue based on the start moment and the first time period, and schedules, in the transmission time period, the low-priority queue to transmit the bandwidth-sensitive service.

In this embodiment, before the scheduling rule is executed, whether the scheduling condition is met is determined first. In other words, step 604 in the embodiment shown in FIG. 6 is performed only when the scheduling condition is met. In this way, a disadvantage that an overall transmission bandwidth of the service data is reduced by continuously performing step 604 is reduced.

The following describes specific scheduling processes of a high-priority queue and a low-priority queue in step 604 in the embodiment shown in FIG. 6 by using an example in which states of the high-priority queue (namely, a first queue) and the low-priority queue (namely, a second queue) are the same as those in FIG. 10.

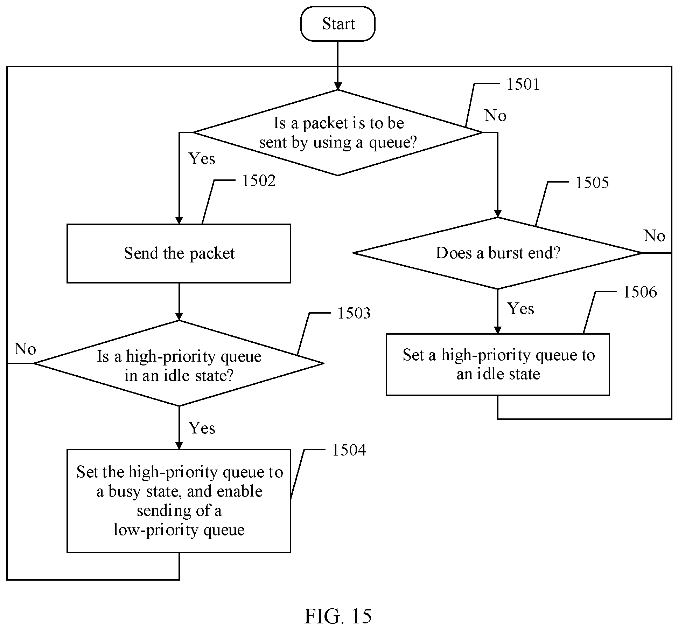

A scheduling process of a high-priority queue is shown in FIG. 15, and the process includes step 1501 to step 1506.

Step 1501: Determine whether a packet is to be sent by using a queue, and perform step 1502 if a packet is to be sent by using the queue, or perform step 1505 if a packet is not to be sent by using the queue.

A traffic scheduling module determines whether a packet is to be sent by using the high-priority queue. Step 1502 is performed if a packet is to be sent by using the high-priority queue; or step 1505 is performed if a packet is not to be sent by using the high-priority queue.

Step 1502: Send the packet.

If it is determined that a packet needs to be sent by using the high-priority queue, the packet is sent.

Step 1503: Determine whether the high-priority queue is in an idle state, and perform step 1504 if the high-priority queue is in the idle state, or perform step 1501 again if the high-priority queue is not in the idle state.

The traffic scheduling module determines whether the high-priority queue is in the idle state. Step 1504 is performed if the high-priority queue is in the idle state; or step 1501 is performed again if the high-priority queue is not in the idle state. The idle state indicates that there is no packet in the high-priority queue, or a quantity of packets is less than a threshold.

Step 1504: Set the high-priority queue to a busy state, and enable sending of a low-priority queue.

If the traffic scheduling module determines that the high-priority queue is in the idle state, the high-priority queue is set to the busy state, and the sending of the low-priority queue is enabled. Enabling the sending may be understood as a moment of enabling a second queue in the embodiment shown in FIG. 6.

Step 1505: Determine whether a burst (burst) ends, and perform step 1506 if the burst ends, or perform step 1501 again if the burst does not end.

The traffic scheduling module determines whether the burst ends. Step 1506 is performed if the burst ends, or step 1501 is performed again if the burst does not end. That is, the traffic scheduling module determines whether a burst of a first data flow ends.

In this embodiment of this application, whether the burst of the first data flow ends is determined in a plurality of manners. Special processing may be performed on a last packet in the first data flow (for example, a packet with a length of 0 is finally sent); or a packet arrival moment may be counted, and when no new packet arrives in a period of time (for example, 1 ms), it is considered that the burst ends; or an identifier field indicating the last packet in the packet may be used. This is not specifically limited herein.

Step 1506: Set the high-priority queue to the idle state.

If the traffic scheduling module determines that the burst of the first data flow ends, the high-priority queue is set to the idle state.

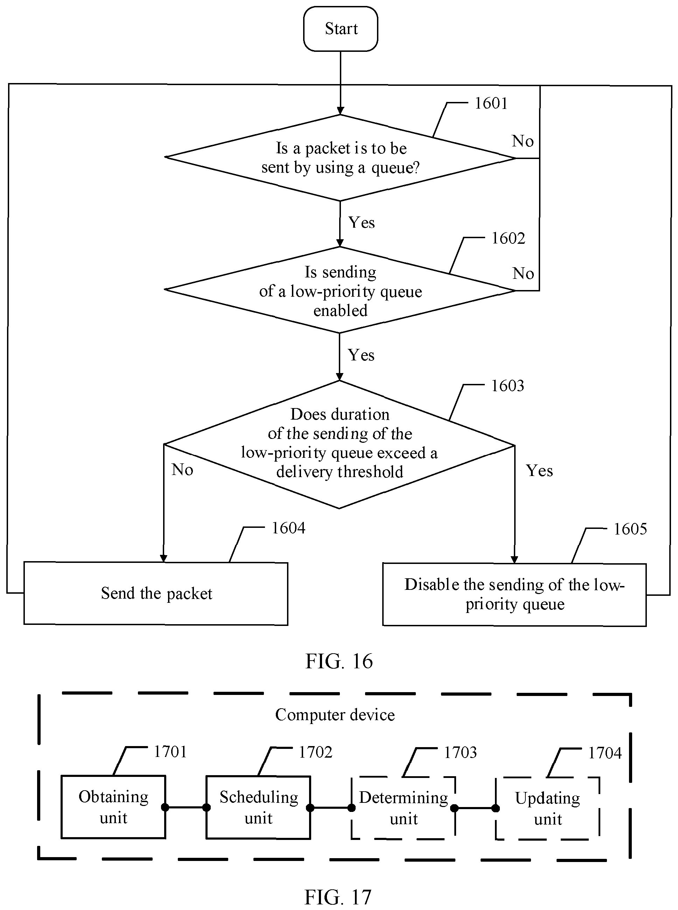

A scheduling process of a low-priority queue is shown in FIG. 16, and the process includes step 1601 to step 1605.

Step 1601: Determine whether a packet is to be sent by using a queue, and perform step 1602 if a packet is to be sent by using the queue; or perform step 1601 again if no packet is to be sent by using the queue.

A traffic scheduling module determines whether a packet is to be sent by using the low-priority queue. Step 1602 is performed if a packet is to be sent by using the low-priority queue; or step 1601 is performed again if no packet is to be sent by using the low-priority queue.

Step 1602: Determine whether sending of the low-priority queue is enabled, and perform step 1603 if the sending of the low-priority queue is enabled, or perform step 1601 again if the sending of the low-priority queue is disabled.

If the traffic scheduling module determines that a packet is sent by using the low-priority queue, the traffic scheduling module determines whether the sending of the low-priority queue is enabled. Step 1603 is performed if the sending of the low-priority queue is enabled; or step 1601 is performed again if the sending of the low-priority queue is disabled.

Step 1603: Determine whether duration of the sending of the low-priority queue exceeds a delivery threshold, and perform step 1605 if the duration of the sending of the low-priority queue exceeds the delivery threshold, or perform step 1604 if the duration of the sending of the low-priority queue does not exceed the delivery threshold.

If the traffic scheduling module determines that the sending of the low-priority queue is enabled, the traffic scheduling module determines whether the duration of the sending of the low-priority queue exceeds the delivery threshold. Step 1605 is performed if the duration of the sending of the low-priority queue exceeds the delivery threshold, or step 1604 is performed if the duration of the sending of the low-priority queue does not exceed the delivery threshold.

The delivery threshold may be the first time period in the embodiment shown in FIG. 6, or may be the second time period in the embodiment shown in FIG. 11. This is not specifically limited herein.

Step 1604: Send the packet.

If the traffic scheduling module determines that the duration of the sending of the low-priority queue does not exceed the delivery threshold (or is understood as that the low-priority queue is in a transmission time period), the traffic scheduling module schedules the low-priority queue to send the packet.

Step 1605: Disable the sending of the low-priority queue.

If the traffic scheduling module determines that the duration of the sending of the low-priority queue exceeds the delivery threshold (or is understood as that the low-priority queue is not in the transmission time period), the sending of the low-priority queue is disabled. That is, no packet is sent by using the low-priority queue.

In this embodiment, FIG. 15 and FIG. 16 provide a method for scheduling a high-priority queue and a low-priority queue in a linkage manner. To be specific, whether data can be sent by using the low-priority queue is determined based on sending enabling of the low-priority queue. The sending is enabled after a signal of the high-priority queue is received, and is disabled after a first time period dynamically delivered by an upper layer based on a rule. In other words, a start moment of transmitting a service by using the low-priority queue is determined based on whether there is a packet in the high-priority queue and a state of the high-priority queue. Before the high-priority service arrives, the low-priority service may be exhausted from a lower-layer queue as much as possible, to reduce a transmission delay of the high-priority service.

The foregoing describes a data processing method in embodiments of this application, and the following describes a computer device in embodiments of this application. The computer device may be a terminal device, a server, or the like. This is not specifically limited herein.

As shown in FIG. 17, an embodiment of a computer device in embodiments of this application includes:
an obtaining unit 1701, configured to obtain a first data flow and a second data flow, where a priority of the first data flow is higher than a priority of the second data flow, the first data flow is transmitted by using a first queue, and the second data flow is transmitted by using a second queue, where
the obtaining unit 1701 is further configured to obtain a transmission feature of the first data flow in the first queue, where the transmission feature is related to a moment at which a packet in the first data flow arrives at the first queue; and
a scheduling unit 1702, configured to schedule the second queue based on the transmission feature.

Optionally, the obtaining unit 1701 is further configured to obtain statistical information related to a network adapter driver. The statistical information includes at least one of the following parameters within a preset time period: quality of service QoS of the first data flow, network adapter utilization, and queue duration of a drive queue, the drive queue is used to receive data from the first queue and the second queue, and the network adapter driver is connected to the computer device.

Optionally, the computer device further includes: a determining unit 1703, further configured to determine, based on a quantity of packets in the first queue, a start moment at which the second data flow is transmitted by using the second queue.

Optionally, the computer device further includes: an updating unit 1704, configured to update the first time period based on the statistical information, to obtain a second time period, where the second time period is used to ensure that the parameter in the statistical information falls within a preset range, and the second time period is used to schedule the second queue.

In this embodiment, operations performed by the units in the computer device are similar to those described in the embodiments shown in FIG. 1A to FIG. 16. Details are not described herein.

In this embodiment, the determining unit 1703 determines the first queue for transmitting the first data flow and the second queue for transmitting the second data flow. The priority of the first data flow is higher than the priority of the second data flow. The scheduling unit 1702 considers the transmission feature of the first data flow in the first queue in a second queue scheduling process, to reduce overstock, of the second data flow scheduled out of the second queue, in a bottom-layer queue. In other words, when scheduling the second queue, the scheduling unit 1702 considers the moment at which the first data flow arrives at the first queue, to reduce in advance interference of second service data in the bottom-layer queue to the first data flow, thereby ensuring low-delay transmission of the first data flow and overall bandwidth utilization of transmitting the first data flow and the second data flow, and providing a proper data scheduling method.

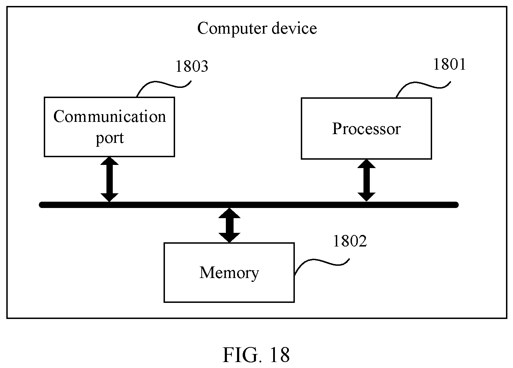

FIG. 18 is a diagram of a structure of another computer device according to this application. The computer device may include a processor 1801, a memory 1802, and a communication port 1803. The processor 1801, the memory 1802, and the communication port 1803 are interconnected through a line. The memory 1802 stores program instructions and data.

The memory 1802 stores program instructions and data that correspond to steps performed by the computer device in the corresponding implementations shown in FIG. 1A to FIG. 16.

The processor 1801 is configured to perform steps performed by the computer device according to any one of embodiments shown in FIG. 1A to FIG. 16.

The communication port 1803 may be configured to receive and send data, and is configured to perform steps related to obtaining, sending, and receiving in any one of embodiments shown in FIG. 1A to FIG. 16.

In an implementation, the computer device may include more or fewer components than those in FIG. 18. This application is merely an example for description, and is not limited.

An embodiment of this application further provides a computer-readable storage medium storing one or more computer-executable instructions. When the computer-executable instructions are executed by a processor, the processor performs the method in the possible implementations of the computer device in the foregoing embodiments.

An embodiment of this application further provides a computer program product (or referred to as a computer program) storing one or more computers. When the computer program product is executed by a processor, the processor performs the method in the possible implementations of the foregoing computer device.

An embodiment of this application further provides a chip system. The chip system includes at least one processor, configured to support functions in the foregoing possible implementations of the computer device. Optionally, the chip system further includes an interface circuit, and the interface circuit provides program instructions and/or data for the at least one processor. In a possible design, the chip system further includes a memory. The memory is configured to store program instructions and data that are necessary for the computer device. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data flow scheduling method, wherein the method is applied to a computer device, and the method comprises:
obtaining a first data flow and a second data flow, wherein a priority of the first data flow is higher than a priority of the second data flow, the first data flow is transmitted by using a first queue, and the second data flow is transmitted by using a second queue;
obtaining a transmission feature of the first data flow in the first queue, wherein the transmission feature is related to a moment at which a packet in the first data flow arrives at the first queue; and
scheduling the second queue based on the transmission feature.

2. The method according to claim 1, wherein the transmission feature is a transmission periodicity of the first data flow; and
the scheduling the second queue based on the transmission feature comprises:
determining a first time period based on the transmission periodicity, wherein duration of the first time period is less than duration of the transmission periodicity, and the first time period is between moments at which adjacent packets in the first data flow arrive at the first queue; and
scheduling the second queue to transmit the second data flow in the first time period.

3. The method according to claim 1 or 2, wherein the method further comprises:
determining, based on a quantity of packets in the first queue, a start moment at which the second data flow is transmitted by using the second queue; and
the scheduling the second queue based on the transmission feature comprises:
scheduling the second queue based on the transmission feature and the start moment.

4. The method according to claim 3, wherein the start moment is determined based on the quantity of packets in the first data flow in the first queue.

5. The method according to claim 4, wherein a moment at which the quantity of packets in the first data flow in the first queue is less than a preset threshold is a first moment, a difference between the start moment and the first moment is positively correlated with a size of the first data flow, and the size of the first data flow comprises at least one of the following: a total quantity of bytes and a quantity of packets.

6. The method according to any one of claims 3 to 5, wherein the scheduling the second queue based on the transmission feature and the start moment comprises:
when the second queue is in a sending periodicity, scheduling the second queue to transmit the second data flow, wherein the sending periodicity is determined based on the start moment and the transmission feature.

7. The method according to any one of claims 1 to 6, wherein the method further comprises:
obtaining statistical information related to a network adapter driver, wherein the statistical information comprises at least one of the following parameters within a preset time period: quality of service QoS of the first data flow, network adapter utilization, and queuing duration of a driver queue, the driver queue is used to receive data from the first queue and the second queue, and the network adapter driver is connected to the computer device; and
updating the first time period based on the statistical information, to obtain a second time period, wherein the second time period is used to ensure that the parameter in the statistical information falls within a preset range, and the second time period is used to schedule the second queue.

8. The method according to any one of claims 1 to 7, wherein the first data flow is a delay-sensitive service, and the second data flow is a bandwidth-sensitive service.

9. The method according to any one of claims 1 to 8, wherein the first queue and the second queue are located on a same computer device or different computer devices.

10. A computer device, wherein the computer device comprises:
an obtaining unit, configured to obtain a first data flow and a second data flow, wherein a priority of the first data flow is higher than a priority of the second data flow, the first data flow is transmitted by using a first queue, and the second data flow is transmitted by using a second queue, wherein
the obtaining unit is further configured to obtain a transmission feature of the first data flow in the first queue, wherein the transmission feature is related to a moment at which a packet in the first data flow arrives at the first queue; and
a scheduling unit, configured to schedule the second queue based on the transmission feature.

11. The computer device according to claim 10, wherein the transmission feature is a transmission periodicity of the first data flow;
the scheduling unit is specifically configured to determine a first time period based on the transmission periodicity, wherein duration of the first time period is less than duration of the transmission periodicity, and the first time period is between moments at which adjacent packets in the first data flow arrive at the first queue; and
the scheduling unit is specifically configured to schedule the second queue to transmit the second data flow in the first time period.

12. The computer device according to claim 10 or 11, wherein the computer device further comprises:
a determining unit, further configured to determine, based on a quantity of packets in the first queue, a start moment at which the second data flow is transmitted by using the second queue, wherein
the scheduling unit is specifically configured to schedule the second queue based on the transmission feature and the start moment.

13. The computer device according to claim 12, wherein the start moment is determined based on the quantity of packets in the first data flow in the first queue.

14. The computer device according to claim 13, wherein a moment at which the quantity of packets in the first data flow in the first queue is less than a preset threshold is a first moment, a difference between the start moment and the first moment is positively correlated with a size of the first data flow, and the size of the first data flow comprises at least one of the following: a total quantity of bytes and a quantity of packets.

15. The computer device according to any one of claims 12 to 14, wherein the scheduling unit is specifically configured to: when the second queue is in a sending periodicity, schedule the second queue to transmit the second data flow, wherein the sending periodicity is determined based on the start moment and the transmission feature.

16. The computer device according to any one of claims 10 to 15, wherein the obtaining unit is further configured to obtain statistical information related to a network adapter driver, wherein the statistical information comprises at least one of the following parameters within a preset time period: quality of service QoS of the first data flow, network adapter utilization, and queuing duration of a driver queue, the driver queue is used to receive data from the first queue and the second queue, and the network adapter driver is connected to the computer device; and
the computer device further comprises:
an updating unit, configured to update the first time period based on the statistical information, to obtain a second time period, wherein the second time period is used to ensure that the parameter in the statistical information falls within a preset range, and the second time period is used to schedule the second queue.

17. The computer device according to any one of claims 10 to 16, wherein the first data flow is a delay-sensitive service, and the second data flow is a bandwidth-sensitive service.

18. The computer device according to any one of claims 10 to 17, wherein the first queue and the second queue are located on a same computer device or different computer devices.

19. A computer device, comprising a processor, wherein the processor is coupled to a memory, the memory is configured to store a program or instructions, and when the program or the instructions are executed by the processor, the computer device is enabled to perform the method according to any one of claims 1 to 9.

20. A computer storage medium, comprising computer instructions, wherein when the computer instructions are run on a terminal device, the terminal device is enabled to perform the method according to any one of claims 1 to 9.

21. A computer program product, wherein when the computer program product is run on a computer, the computer is enabled to perform the method according to any one of claims 1 to 9.
